# EUROPÄISCHE PATENTANMELDUNG

(11) **EP 1 285 925 A1**
(43) Veröffentlichungstag der Anmeldung: **26.02.2003**
(21) Anmeldenummer: 02016150.1
(22) Anmeldetag: 20.07.2002
(51) Int. Cl.: C07F 5/02

(54) **Verfahren zur Herstellung von Aryl- und Alkyl-Bor-Verbindungen in Mikroreaktoren**

(30) Priorität: 11.08.2001 DE 10139664
(71) Anmelder: Clariant GmbH, 65929 Frankfurt am Main (DE)
(72) Erfinder: Koch, Manfred, Dr., 65817 Eppstein-Niederjosbach (DE); Wehle, Detlef, Dr., 65611 Brechen (DE); Scherer, Stefan, Dr., 64572 Büttelborn (DE); Forstinger, Klaus, Dr., 64832 Babenhausen (DE); Meudt, Andreas, Dr., 65439 Flörsheim-Weilbach (DE)
(74) Vertreter: Hütter, Klaus, Dr.

(57) **Zusammenfassung**

Verfahren zur Herstellung von Aryl- und Alkyl-Bor-Verbindungen der allgemeinen Formel (II) und (III) durch Umsetzung von Lithioaromaten und lithiierten Aliphaten der allgemeinen Formel (I) mit Borverbindungen in Mikroreaktoren gemäß Gleichung I oder Gleichung II, 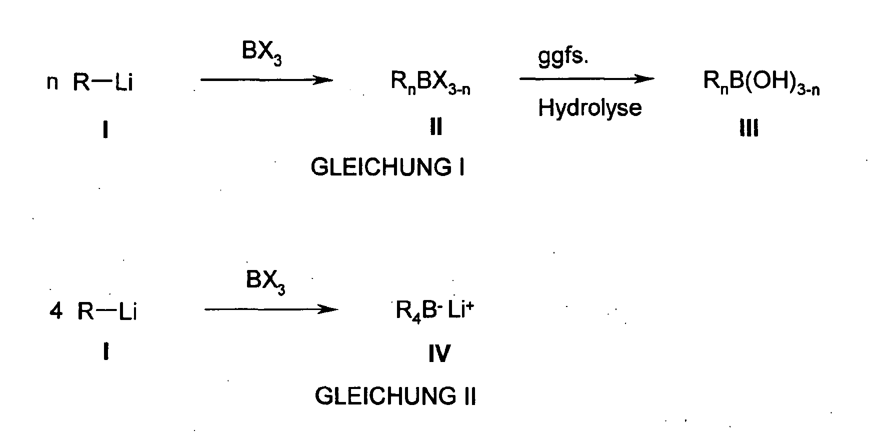 worin X = gleiche oder verschiedene Reste aus den Reihen Fluor, Chlor, Brom, lod, C₁-C₅-Alkoxy, N,N-Di(C₁-C₅-Alkyl)amino oder (C₁-C₅-Alkyl)thio,
n = 1, 2 oder 3,
und R = geradkettiges oder verzweigtes C₁-C₆-Alkyl, mit einem Rest aus der Gruppe (RO, RR'N, Phenyl, substituiertes Phenyl, Fluor, RS) substituiertes C₁-C₆-Alkyl, Phenyl, mit einem Rest aus der Gruppe (C₁-C₆-Alkyl, C₁-C₆-Alkoxy, C₁-C₅-Thioether, Silyl, Fluor, Chlor, Dialkylamino, Diarylamino, Alkyl-aryl-amino) substituiertes Phenyl oder
substituierten oder unsubstituierten Hetero-Sechsring-Aryl mit einem bis zwei Stickstoffatomen oder Hetero-Fünfring-Aryl mit einem bis zwei Heteroatomen aus der Gruppe (N, O, S) oder
einem substituierten oder unsubstituierten zwei- bis dreikernigen Aromaten, bedeuten,
in einem oder gegebenenfalls mehreren hintereinandergeschalteten temperierbaren Mikroreaktoren, deren Auslasskanäle erforderlichenfalls mit mehrere Meter langen Kapillaren oder Schläuchen verbunden sind, wobei die Reaktionslösungen während einer ausreichenden Verweilzeit intensiv vermischt werden.

Die Reaktion wird vorzugsweise bei Temperaturen im Bereich von -60°C bis +30°C durchgeführt.

## Beschreibung

Die Erfindung betrifft ein Verfahren zur Herstellung von Aryl- und Alkyl-Bor-Verbindungen (II) bzw. (III) durch Umsetzung von Lithioaromaten und lithiierten Aliphaten (I) mit Borverbindungen in Mikroreaktoren gemäß Gleichung I oder Gleichung II, 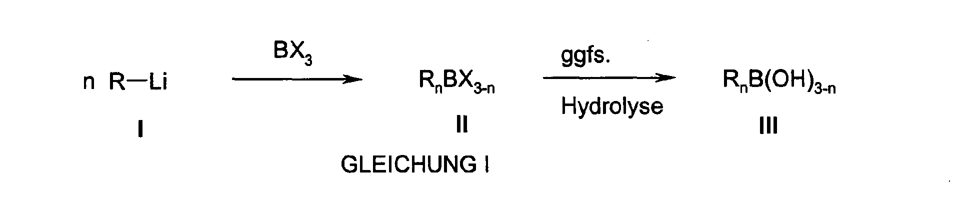 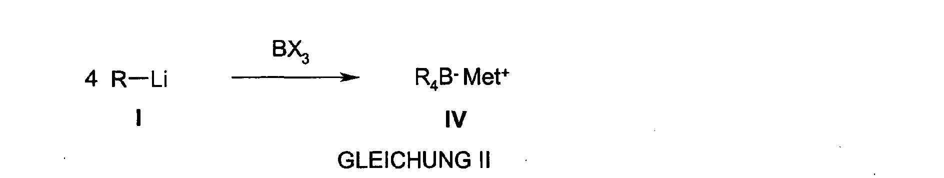 worin X = gleiche oder verschiedene Reste aus den Reihen Fluor, Chlor, Brom, lod, C₁-C₅-Alkoxy, N,N-Di(C₁-C₅-Alkyl)amino oder (C₁-C₅-Alkyl)thio,
n = 1, 2 oder 3,
und R = geradkettiges oder verzweigtes C₁-C₆-Alkyl, mit einem Rest aus der Gruppe (RO, RR'N, Phenyl, substituiertes Phenyl, Fluor, RS) substituiertes C₁-C₆-Alkyl, Phenyl, mit einem Rest aus der Gruppe (C₁-C₆-Alkyl, C₁-C₆-Alkoxy, C₁-C₅-Thioether, Silyl, Fluor, Chlor, Dialkylamino, Diarylamino, Alkyl-aryl-amino) substituiertes Phenyl, Hetero-Sechsring-Aryl mit einem bis zwei Stickstoffatomen, Hetero-Fünfring-Aryl mit einem bis zwei Heteroatomen aus der Gruppe (N, O, S) oder einem substituierten oder unsubstituierten zwei- bis dreikernigen Aromaten,
bedeuten.

Aryl- und Alkylborverbindungen haben sich in den letzten Jahren zu sehr vielseitig einsetzbaren Synthesebausteinen entwickelt, durch deren Einsatz, z.B. in der Suzuki-Kupplung, eine Vielzahl von wirtschaftlich sehr interessanten Feinchemikalien vor allem für die Pharma- und Agro-Industrie hergestellt werden können. Hier sind in erster Linie die Aryl- und Alkylboronsäuren zu nennen, bei denen eine Auftragung der Zahl der Anwendungen im Bereich Wirkstoffsynthese gegen eine Zeitachse in den letzten Jahren einer Exponentialfunktion entspricht. Von zunehmender Bedeutung sind aber auch Diarylborinsäuren, beispielsweise als Cokatalysatoren in der Olefinpolymerisation oder auch als Einsatzmaterial in Suzuki-Kupplungen, bei denen alle beiden Arylreste übertragen werden können.

Die Umwandlung von Lithioaromaten und lithiierten Aliphaten zu Alkyl- und Arylborverbindungen sind in einer Vielzahl von Publikationen bereits beschrieben und verlaufen unter strenger Einhaltung von für den jeweiligen Fall genauestens optimierten Reaktionsbedingungen auch in guten Ausbeuten.

Nachteilig allerdings ist der Umstand, dass bei dieser Umsetzung eine breite Palette an Nebenprodukten entstehen kann und tatsächlich in Mengen, die stark von den angewandten Bedingungen abhängig sind, auch entsteht. Prinzipiell ist hier nach Hydrolyse der Reaktionsmischungen an möglichen Produkten neben den Homokupplungsprodukten, also den entsprechenden Biarylen oder Bialkylen, die Bildung von Boronsäuren, Borinsäuren, Triaryl- und Trialkylboranen und Tetraaryl- bzw. Tetraalkylboranaten zu nennen. Bis auf die letztgenannten geladenen Verbindungen sind die gewünschten Reaktionsprodukte jeweils nur unter Inkaufnahme aufwendiger Reinigungsoperationen abtrennbar, die die Ausbeute vermindern und die Herstellkosten der Produkte deutlich erhöhen.

Für den Fall der Herstellung von Aryl- oder Alkylboronsäuren gilt beispielsweise Folgendes: Da hier die Gefahr der Bildung von Biarylen bzw. Bialkylen, Borinsäuren, Boranen und sogar Boranaten besteht, bei denen gleich zwei, drei bzw. vier Äquivalente des metallorganischen Reagenzes verbraucht werden, kann auch aus diesem Grund die Ausbeute bei Nichteinhaltung optimaler Bedingungen regelrecht zusammenbrechen. In vielen Fällen werden geringe Ausbeuten schwierig aufzureinigender Rohprodukte erhalten. Entsprechendes gilt für die Herstellung von Borinsäuren, Boranen und Boranaten.

Um die voranstehend genannten Nebenreaktionen zu umgehen, muss zwangsläufig bei tiefen Temperaturen gearbeitet werden, um so die bei der Primärreaktion entstehenden Primärprodukte, im Falle der Herstellung von Boronsäuren die Aryl- oder Alkylboranate (V), vor dem Zerfall in die freien Boronsäureester oder - halogenide 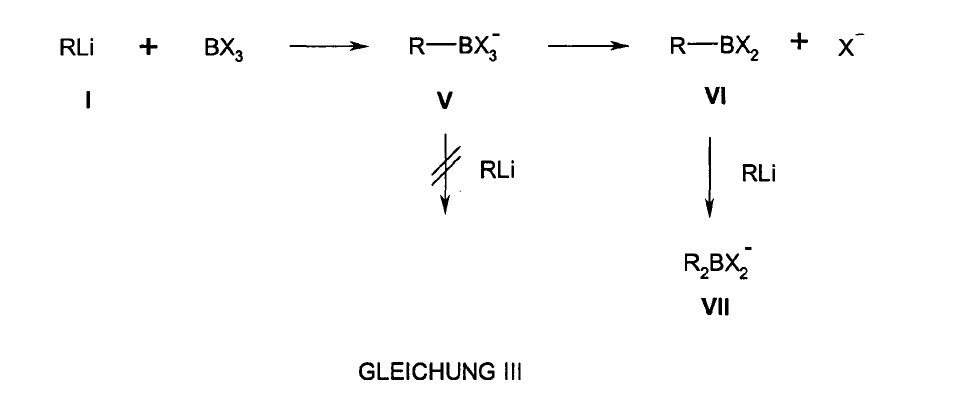 (VI) zu schützen, da letztere mit unumgesetztem BX₃ um weitere metallorganische Verbindung (I) konkurrieren und so Nebenprodukte und Ausbeuteverluste bewirken würden. Entsprechendes gilt hier ganz ähnlich auch für die Herstellung höheralkylierter oder -arylierter Borverbindungen (GLEICHUNG III).

Ideale Reaktionstemperaturen liegen hierbei unter -35°C, gute Ergebnisse erhält man aber erst unter -50°C, kaum noch Nebenprodukte und reine Bor-Verbindungen werden bei Temperaturen unter -55°C erhalten. Diese Temperaturen sind technisch mit billigen Kühlverfahren wie z.B. Solekühlung nicht mehr zu erreichen, sondern müssen unter hohem Energieaufwand und auf teure Weise generiert werden. In Kombination z.B. mit der Herstellung des Lithium-Reagenzes, bei der meist bei Rückflusstemperatur in geeigneten Kohlenwasserstoffen gearbeitet wird, und der Aufarbeitung, bei der sich im allgemeinen eine destillative Abtrennung des Solvens anschließt, resultiert ein wenig ökonomischer und mit hohen Fertigungskosten verbundener Prozess, bei dem folgende Temperaturbereiche durchlaufen werden müssen: Raumtemperatur -> Rückfluss (Lithiierung) -> Abkühlen -> Tieftemperatur (Boronsäure-Herstellung) -> Raumtemperatur (Hydrolyse) -> Siedetemperatur (Lösungsmittelabtrennung) -> Abkühlen (Filtration oder Extraktion).

Bedeutsam ist auch der Umstand, dass sehr viele Borverbindungen über Lithiumaromaten nur unter Inkaufnahme erheblicher sicherheitstechnischer Risiken herstellbar sind, da die Herstellung vieler Lithiumverbindungen in industriell anwendbaren Mengen und Konzentrationen sehr bedenklich ist. So können z.B. Lithiumaromaten mit benachbarten Halogenatomen, mit CF₃-Resten oder mit C-CI-Seitenketten vor allem bei Anwesenheit katalytischer Verunreinigungen spontaner Zersetzung unterliegen, wobei aufgrund der Bildung von sehr energiearmen Lithiumhalogeniden enorme Energien freigesetzt werden. Bei Umsetzungen in großen Mengen muss hier sogar mit schweren Explosionen gerechnet werden.

Des weiteren muss stets mit einem Überschuss an meist teurem BX₃ gearbeitet werden. Verfahrenstechnisch muss man - außer bei extrem tiefen Temperaturen - BX₃ vorlegen und die Lösung der Lithiumverbindung sehr langsam zutropfen, wobei auch diese in gekühlter Form zugetropft werden sollte. Als weiterer Erfolgsfaktor ist das Arbeiten in relativ verdünnten Lösungen zu nennen, wodurch nur geringe Raum/Zeit-Ausbeuten erzielt werden können.

Es bestand daher das Bedürfnis, ein Verfahren zur Herstellung von Aryl- und Alkyl-Bor-Verbindungen zu haben - unter Beibehaltung der Rohstoffe-Lithiumorganyle und Borverbindungen BX₃ - bei dem idealerweise die Umsetzungstemperaturen über -40°C liegen und zudem mit hohen Konzentrationen der Reaktanden gearbeitet werden kann, ohne dass - wie bei klassisch-verfahrenstechnischen Herangehensweisen - größere Mengen an den oben genannten Nebenprodukten gebildet werden und gleichzeitig noch möglichst hohe Ausbeuten an reinen Borverbindungen gebildet werden. Trotz vielfältiger Bemühungen war es bisher aber weder uns noch anderen Autoren gelungen, entsprechende Reaktionsbedingungen zu finden. Ein ideales Verfahren würde zudem gleichzeitig noch die gefahrlose Herstellung solcher Borverbindungen ermöglichen, in deren Synthese sicherheitstechnisch bedenkliche Lithiumorganyle eingesetzt werden müssen.

Die vorliegende Erfindung löst alle diese Aufgaben und betrifft ein Verfahren zur Herstellung von Aryl- und Alkyl-Bor-Verbindungen (II) und (III) durch Umsetzung von Lithioaromaten und lithiierten Aliphaten (I) mit Borverbindungen in Mikroreaktoren gemäß Gleichung I oder Gleichung II, 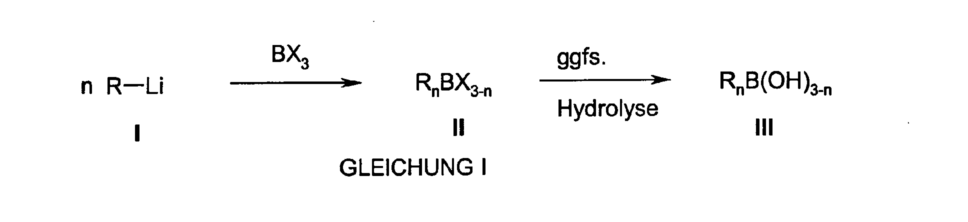 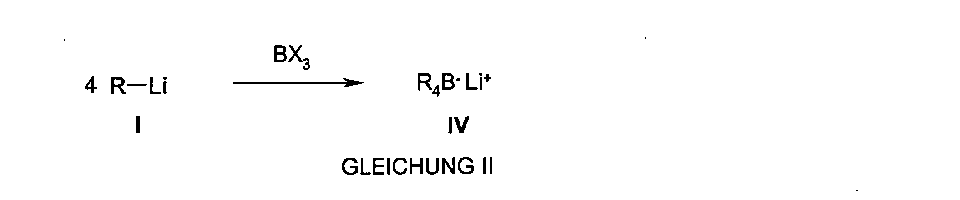 worin X = gleiche oder verschiedene Reste aus den Reihen Fluor, Chlor, Brom, lod, C₁-C₅-Alkoxy, N,N-Di(C₁-C₅-Alkyl)amino oder (C₁-C₅-Alkyl)thio,
n = 1, 2 oder 3,
und R = geradkettiges oder verzweigtes C₁-C₆-Alkyl, mit einem Rest aus der Gruppe (RO, RR'N, Phenyl, substituiertes Phenyl, Fluor, RS) substituiertes C₁-C₆-Alkyl oder Phenyl, mit einem Rest aus der Gruppe (C₁-C₆-Alkyl, C₁-C₆-Alkoxy, C₁-C₅-Thioether, Silyl, Fluor, Chlor, Dialkylamino, Diarylamino, Alkyl-aryl-amino) substituiertes Phenyl oder
Hetero-Sechsring-Aryl mit einem bis zwei Stickstoffatomen, z.B. Pyridin, Picolin, Pyridazin, Pyrimidin oder Pyrazin, oder
Hetero-Fünfring-Aryl mit einem bis zwei Heteroatomen aus der Gruppe (N, O, S) z.B. Pyrrol, Furan, Thiophen, Imidazol, Oxazol oder Thiazol oder einem substituierten oder unsubstituierten zwei- bis dreikernigen Aromaten, z.B. Naphthalin, Anthracen oder Phenanthren,
bedeuten,

in einem oder gegebenenfalls mehreren hintereinandergeschalteten temperierbaren Mikroreaktoren, deren Auslasskanäle erforderlichenfalls mit mehrere Meter langen Kapillaren oder Schläuchen verbunden sind, wobei die Reaktionslösungen während einer ausreichenden Verweilzeit intensiv vermischt werden.

Bei einer Hintereinanderschaltung mehrerer Mikroreaktoren, wird in dem ersten Mikroreaktor die lithiumorganische Verbindung durch eine der dem Fachmann geläufigen Methoden der metallorganischen Chemie erzeugt, durch eine Kapillare oder einen Schlauch in einen zweiten, dahintergeschalteten Mikroreaktor eingespeist und dort mit BX₃ umgesetzt.

Die Aufarbeitung der gesammelten Reaktionsgemische kann durch "klassische" Aufarbeitungs- und Hydrolysemethoden erfolgen.

Erfindungsgemäß kann dieses Verfahren kontinuierlich durchgeführt werden.

Zur Durchführung des erfindungsgemäßen Verfahrens können insbesondere Durchflussreaktoren eingesetzt werden, deren Kanäle einen Durchmesser von 25 Mikrometer bis 1,5 mm, insbesondere 40 Mikrometer bis 1,0 mm, aufweisen. Dabei wird die Durchflussrate so eingestellt, dass sich eine Verweilzeit ergibt, die dem Erreichen eines Umsatzes von mindestens 70 % entspricht. Vorzugsweise wird die Durchflussrate im Mikroreaktor so eingestellt, dass eine Verweilzeit zwischen einer Sekunde und 10 Minuten, insbesondere 10 Sekunden bis 5 Minuten, erzielt wird. Im Falle des Hintereinanderschaltens zweier Mikroreaktoren muss die Verweilzeit im ersten Reaktor inklusive der Verweilzeit im Kapillaren- oder Schlauchsystem auf dem Weg zum zweiten Reaktor so eingestellt werden, dass der Umsatz bei der Herstellung der metallorganischen Verbindung mindestens 90 % beträgt, bevorzugt mindestens 95 %.

Bevorzugt werden solche Reaktoren eingesetzt, welche mit Hilfe von Technologien hergestellt werden können, die in der Herstellung von Siliciumchips angewendet werden. Es können aber auch vergleichbare Reaktoren eingesetzt werden, die aus anderen, gegenüber den Lithium-Lösungen und den Borverbindungen inerten Materialien, wie beispielsweise Keramik, Glas, Graphit oder Edelstahl oder Hastelloy, hergestellt werden. Bevorzugt werden die Mikroreaktoren hergestellt, indem dünne Siliciumstrukturen miteinander verbunden werden.

Entscheidend für die Wahl der einzusetzenden miniaturisierten Durchflussreaktoren ist die Einhaltung folgender Parameter:
- Das Reaktionsgemisch muss in jedem Volumenelement annähernd gleichmäßig vermischt werden
- Die Kanäle müssen so weit sein, dass ein ungehindertes Durchströmen möglich ist, ohne dass sich unerwünschter Druck aufbaut
- Die Struktur der Mikroreaktoren muss in Kombination mit den eingestellten Flussraten eine ausreichende Verweilzeit ermöglichen, um einen Mindestumsatz zu erlauben
- Das System bestehend aus Mikroreaktor und Ableitungsschläuchen oder aus zwei hintereinandergeschalteten Mikroreaktoren mit Verbindungsschläuchen und Ableitungsschläuchen muss temperierbar sein

Die erfindungsgemäßen Umwandlungen werden vorteilhaft bei Temperaturen zwischen -60°C und +30°C durchgeführt, bevorzugt bei -50°C bis +25°C, besonders bevorzugt zwischen -40°C und +20°C.

Es zeigt sich hierbei, dass die in den eingesetzten Mikroreaktoren erzielbare optimale Vermischung zu dem sehr bemerkenswerten Ergebnis führt, dass der Gehalt der resultierenden Borverbindungen an den oben genannten Nebenprodukten fast unabhängig von der Reaktionstemperatur ist. Typische Gehalte der hergestellten Borverbindungen an den genannten Nebenprodukten sind dabei im Falle der Herstellung von Boronsäuren zwischen 0,1 und 3 % Borinsäure, < 0,1 % Boran und nicht nachweisbare Mengen an Boranaten. Derartige Selektivitäten sind selbst bei tiefen Temperaturen bei Anwendung "klassischer Verfahrenstechniken" nicht erreichbar.

Die Aufarbeitung kann dadurch beliebig einfach gestaltet werden, dass keine Produktaufreinigungen mehr erforderlich sind. Selbst für Anwendungen mit höchsten Reinheitsansprüchen können die erhaltenen Borverbindungen direkt eingesetzt werden. Eine bevorzugte Aufarbeitungsmethode ist z.B. das Eintragen der Reaktionsmischungen in Wasser, Ansäuern mit Mineralsäure, Abdestillieren des/der Lösungsmittel und Filtration der reinen Borverbindungen.

Im erfindungsgemäßen Verfahren zur Herstellung von Arylboronsäuren lassen sich so beispielsweise Produktreinheiten von > 99 % und Ausbeuten von >95 % erzielen.

Geeignete Lösungsmittel für die erfindungsgemäße Methode zur Herstellung von Borverbindungen sind aliphatische und aromatische Ether und Kohlenwasserstoffe und Amine, die keinen Wasserstoff am Stickstoff tragen, bevorzugt Triethylamin, Diethylether, Tetrahydrofuran, Toluol, Toluol/THF-Mischungen, und Diisopropylether, besonders bevorzugt Toluol, THF oder Diisopropylether.
Bevorzugt werden Lösungen in Konzentrationen im Bereich von 1 bis 35 Gew.-%, insbesondere 5 bis 30 Gew.-%, besonders bevorzugt 8 bis 25 Gew.-%.

Im Falle der Herstellung der lithiumorganischen Verbindung in einem vorgeschalteten Mikroreaktor sind sämtliche dem Fachmann geläufigen Methoden der metallorganischen Chemie einsetzbar, wobei in Einzelfällen geringfügige Variationen aufgrund der besonderen Anforderungen der Mikroreaktionstechnik erforderlich sind. So ist es beispielsweise natürlich nicht möglich, ausgehend von Halogenaromaten durch Umsetzung mit kompaktem Lithiummetall in einem Mikroreaktor Lithiumaromaten herzustellen. Da dies aber eine wichtige und sehr breit anwendbare Methode zur Erzeugung von Lithiumaromaten ist, wurde nach einer Lösung, die auch für die Übertragung solcher Reaktionen in die Mikroreaktortechnik anwendbar ist, gesucht und mit dem Einsatz von "organischen Redoxsystemen" auch gefunden. Hierzu wird zunächst in einem ,;klassischen Reaktor" durch Rühren von Lithiummetall (Granalien, Stücke, Pulver, Dispersionen, Barren, Stangen oder andere Partikel) mit einem der zahlreichen dem Fachmann geläufigen organischen Moleküle, die leicht die freien Valenzelektronen des Alkalimetalls aufnehmen und effizient übertragen können, eine homogene Lösung eines Elektronenüberträgers generiert. Hierbei kann es sich beispielsweise um Lithiumbiphenylid, Lithium(bis-tert.-butylbiphenylid) oder andere Derivate ein- oder mehrkerniger Aromaten handeln. Diese tiefgefärbten Lösungen dann im ersten Mikroreaktor (1) z.B. mit einem Halogenaromaten unter Bildung des gewünschten metallorganischen Reagenzes zur Reaktion gebracht, wobei die Rückbildung des organischen Elektronenüberträgers erfolgt. Dieser kann beliebig oft recycelt werden, wodurch in der Gesamtbilanz ein sehr ökonomisches Verfahren resultiert. Die Abtrennung des Katalysators von den Borverbindungen nach der Umsetzung mit BX₃ im nachgeschalteten Mikroreaktor 2 ist im allgemeinen eine sehr einfache Aufgabe, da nach Hydrolyse und Einstellung eines alkalischen pH-Wertes die Borverbindungen in Lösung gehen, während der Redoxkatalysator durch Extraktion oder Filtration quantitativ zurückgewonnen werden kann.

Eine weitere bevorzugte Methode der Herstellung der lithiumorganischen Verbindung im Mikroreaktor 1 ist die Umsetzung einer entweder käuflich erhältlichen oder in einem "klassischen Reaktor" generierten lithiumorganischen Verbindung mit einem Halogenaromaten oder Halogenaliphaten oder einer deprotonierbaren organischen Verbindung. So lässt sich beispielsweise aus Furan durch Umsetzung mit n-Hexyllithium im Mikroreaktor 1 Furyllithium herstellen, das dann im Mikroreaktor 2 mit Trialkylboraten zu Furan-2-boronsäure umgesetzt werden kann. Man erhält
2-Furanboronsäure mit Selektivitäten (bezogen auf Borinsäure, Boran und Tetrafurylboranat) von > 98 %.

Das erfindungsgemäße Verfahren soll durch die nachfolgenden Beispiele erläutert werden, ohne die Erfindung darauf zu beschränken:

### Beispiele 1 bis 4

### Boronsäuren aus nHexLi, deprotonierbarem Aromaten oder Aliphaten und B(OCH₃)₃

Für die Kombination aus a) Deprotonierung mittels Hexyllithium und b) Umsetzung mit Trimethylborat wurden zwei der in Beispiel 1 beschriebenen Mikroreaktoren hintereinandergeschaltet. Dabei wurde die den Mikroreaktor 1 verlassende Metallierungsmischung durch eine Edelstahlkapillare, Innendurchmesser 0,5 mm, Länge 1,5 m, in den zweiten Reaktor eingespeist. Die besten Ergebnisse wurden erhalten, wenn folgende Stoffströme und folgende Konzentrationen gewählt wurden:
Mikroreaktor 1: Zufluss von a) Reaktand, c = 1,0 mol/L, 10 L/h und b) n-Hexyllithium in Hexan, c = 1,0 mol/L, 10 L/h
Mikroreaktor 2: Zufluss von a) obige Reaktionsmischung, c = 0,5 mol/L, 20 L/h und b) Trimethylborat in THF, c = 0,5 mol/L, 20 L/h

Als Standardbedingungen wurden eine Kühlung der Eduktlösungen und der Reaktoren in einem Kältebad auf -30°C gewählt, da einige der eingesetzten Organolithiumverbindungen bei höheren Temperaturen das Lösungsmittel THF angreifen.

Die Ergebnisse aus einer Versuchsreihe sind in nachstehender Tabelle zusammengefasst:

| Versuch | Substrat | Produkt | Isolierte Ausbeute | HPLC a/a (Reinheit) | Gehalt an Borinsäure |
|---|---|---|---|---|---|
| 1 | Furan | 2-Furan-boronsäure | 79,5 % | 96,9 % | < 0,1 % |
| 2 | Thiophen | 2-Thiophen-boronsäure | 74,2 % | 97,1 % | < 0,1 % |
| 3 | Fluorbenzol | 2-F-phenyl-boronsäure | 88,1 % | 96,9 % | 0,9 % |
| 4 | Benzotrifluorid | 2-CF₃-phenyl-boronsäure | 86,7 % | 97,8 % | 0,7 % |

### Beispiel 5

### Herstellung von Furan-2-boronsäure

Zunächst wurde eine Lösung von Lithiumbiphenylid in THF hergestellt, indem 0,25 mol Lithiumgranalien und 0,27 mol Biphenyl in 500 mL trockenem THF bei -40°C so lange gerührt wurden, bis das Lithiummetall komplett aufgelöst war (7 h). Die so erhaltene Lösung (c = wurde parallel mit einer Lösung von Furan (frisch destilliert) in THF (c = 0,5 mol/L) in einen Mikroreaktor eingespeist, wobei der Reaktor und die Furanlösung auf -20°C temperiert wurde. Der eingesetzte Mikromischer war ein Einzel-Mikromischer mit 25 x 300 µm- und 40 x 300 µm-Strukturen in Nickel auf einer Kupferhinterfütterung des Instituts für Mikrotechnik Mainz. Der Ausgang des Reaktors war über eine 1,5 m Edelstahlkapillare, Innendurchmesser 0,5 mm mit einem baugleichen, ebenfalls auf -20°C gekühlten Mikroreaktor verbunden, in den parallel zur in Mikroreaktor 1 gebildeten Lithiofuran-Lösung die Trimethylborat-Lösung eingespeist wurde. Die erhaltene Reaktionsmischung wurde auf Wasser gegossen (pH = 11,2), der pH mit 20 % Schwefelsäure auf 7,0 eingestellt und die Lösungsmittel möglichst schonend bei 120 mbar abdestilliert. Anschließend wurde der pH wieder auf 9,0 eingestellt, um das Produkt aufzulösen und das Biphenyl durch Filtration bei 5°C zurückzugewinnen. Danach stellt man auf den pH der reinen Boronsäure (5,2) ein, isoliert diese durch Filtration und trocknet bei 40°C/110 mbar. Ausbeute bezogen auf eingesetztes Furan 59,2 %, Borinsäure nicht nachweisbar (< 0,5 %).

## Patentansprüche

1. Verfahren zur Herstellung von Aryl- und Alkyl-Bor-Verbindungen der allgemeinen Formel (II) und (III) durch Umsetzung von Lithioaromaten und lithiierten Aliphaten der allgemeinen Formel (I) mit Borverbindungen in Mikroreaktoren gemäß Gleichung I oder Gleichung II, 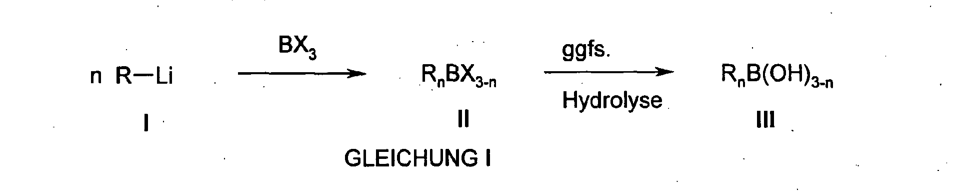 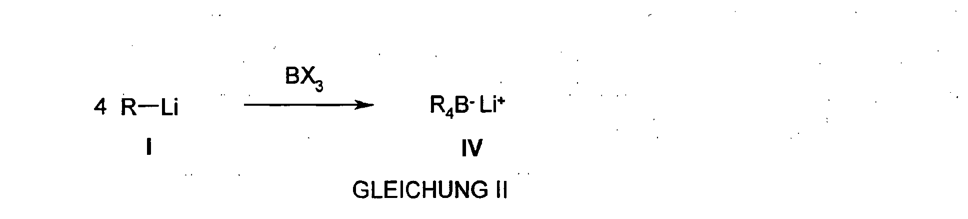 worin X = gleiche oder verschiedene Reste aus den Reihen Fluor, Chlor, Brom, lod, C₁-C₅-Alkoxy, N,N-Di(C₁-C₅-Alkyl)amino oder (C₁-C₅-Alkyl)thio,
n = 1, 2 oder 3,
und R = geradkettiges oder verzweigtes C₁-C₆-Alkyl, mit einem Rest aus der Gruppe (RO, RR'N, Phenyl, substituiertes Phenyl, Fluor, RS) substituiertes C₁-C₆-Alkyl, Phenyl, mit einem Rest aus der Gruppe (C₁-C₆-Alkyl, C₁-C₆-Alkoxy, C₁-C₅-Thioether, Silyl, Fluor, Chlor, Dialkylamino, Diarylamino, Alkyl-aryl-amino) substituiertes Phenyl oder
substituierten oder unsubstituierten Hetero-Sechsring-Aryl mit einem bis zwei Stickstoffatomen oder Hetero-Fünfring-Aryl mit einem bis zwei Heteroatomen aus der Gruppe (N, O, S) oder
einem substituierten oder unsubstituierten zwei- bis dreikernigen Aromaten, bedeuten,
in einem oder gegebenenfalls mehreren hintereinandergeschalteten temperierbaren Mikroreaktoren, deren Auslasskanäle erforderlichenfalls mit mehrere Meter langen Kapillaren oder Schläuchen verbunden sind, wobei die Reaktionslösungen während einer ausreichenden Verweilzeit intensiv vermischt werden.

2. Verfahren nach Anspruch 1, **dadurch gekennzeichnet, dass** zunächst durch Rühren von Lithiummetall in einem Lösungsmittel mit einer organischen Verbindung, die leicht freie Valenzelektronen aufnehmen und übertragen kann, eine homogene Lösung eines Elektronenüberträgers generiert wird und diese mit einem Halogenaromaten im ersten Mikroreaktor zur Reaktion gebracht wird und durch eine Kapillare oder einen Schlauch in einen zweiten, dahintergeschalteten Mikroreaktor eingespeist und dort mit BX₃ umgesetzt wird.

3. Verfahren nach mindestens einem der vorhergehenden Ansprüche, **dadurch gekennzeichnet, dass** als Mikroreaktoren Durchflußreaktoren eingesetzt werden, deren Kanäle einen Durchmesser von 25 µm bis 1,5 mm aufweisen.

4. Verfahren nach mindestens einem der vorhergehenden Ansprüche, **dadurch gekennzeichnet, dass** die Durchflussrate im Mikroreaktor so eingestellt wird, dass eine Verweilzeit zwischen einer Sekunde und 10 Minuten erzielt wird.

5. Verfahren nach mindestens einem der vorhergehenden Ansprüche, **dadurch gekennzeichnet, dass** die Reaktion bei Temperaturen im Bereich von -60°C bis +30°C durchgeführt wird.

6. Verfahren nach mindestens einem der vorhergehenden Ansprüche, **dadurch gekennzeichnet, dass** bei der Hintereinanderschaltung von zwei Mikroreaktoren, die Verweilzeit im ersten Reaktor, inklusive der Verweilzeit in den Kapillaren- und Schlauchsystemen auf dem Weg zum zweiten Reaktor so eingestellt wird, dass der Umsatz bei der Herstellung der metallorganischen Verbindung mindestens 90 % beträgt.

7. Verfahren nach mindestens einem der vorhergehenden Ansprüche, **dadurch gekennzeichnet**, das Lösungen mit einer Konzentration im Bereich von 1 bis 35 Gew.-% eingesetzt werden.
